# EUROPEAN PATENT APPLICATION

(11) **EP 4 621 594 A1**
(43) Date of publication of application: **24.09.2025**
(21) Application number: 25164762.4
(22) Date of filing: 19.03.2025
(51) Int. Cl.: G06F 16/3329, G06F 16/334

(54) **METHODS AND SYSTEMS FOR TACIT KNOWLEDGE GENERATION USING HIGH PERFORMANCE COMPUTING IN DOCUMENT SYNTHESIS**

(30) Priority: 21.03.2024 IN 202421021640
(71) Applicant: Tata Consultancy Services Limited, Maharashtra (IN)
(72) Inventor: KULKARNI, Revati Nitin, 411057 Pune, Maharashtra (IN); BARVE, Saurabh, 411057 Pune, Maharashtra (IN); HARDIKAR, Rahul Padmakar, 390023 Vadodara, Gujarat (IN); SARKAR, Shampa, 400076 Mumbai, Maharashtra (IN)
(74) Representative: Goddar, Heinz J.

(57) **Abstract**

The present disclosure herein addresses the problem of synthesizing a series of documents and extracting or summarizing meaningful information or content embedded as tacit knowledge in the series of documents. The embodiment of the present disclosure provides a system and method for tacit knowledge generation using large language model (LLM) in document synthesis. The method of the present disclosure performs intelligent document generation orchestrating a generative artificial intelligence solution workflow. In the present disclosure, tacit knowledge of subject matter experts in a knowledge base or in a series of documents is extracted. Further a content capturing the tacit knowledge is generated leveraging a large language models (LLMs) framework as the underlying architecture. The system of the present disclosure is artificial intelligence (AI) accelerated, cloud agnostic, latency defined, and security enabled.

## Description

### CROSS-REFERENCE TO RELATED APPLICATIONS AND PRIORITY

The present application claims priority to Indian application no. 202421021640, filed on 21 March 2024.

### TECHNICAL FIELD

The disclosure herein generally relates to document synthesis, and, more particularly, to methods and systems for tacit knowledge generation using high performance computing in document synthesis.

### BACKGROUND

With the current advent of Generative artificial intelligence (Gen AI) research and large language models, there is a business necessity to apply such a platform or framework in a resource efficient/optimized, scalable, high-performant environment. Latency for such services needs to be defined in a cloud-agnostic manner. At the same time, there is a requirement to host such services in a private or secured (data) environment with real-time data orchestration. Further, there is a need to capture tacit knowledge inherently available to domain specialists through various contents and knowledge bases.

Tacit knowledge is unstructured knowledge. It can be in the form of text, image or mathematical formulae as data or metadata, distributed or embedded in several hundreds or thousands of documents. This content can be multimodal, as having various modalities of text, vision (i.e., image), speech, and/or the like. Tacit knowledge can also be obtained in the form of domain specific language (DSL), which is different from the general-purpose language (GPL). A Domain-Specific Language (DSL) can have its own ontology and can be targeted to a particular kind of problem or a domain, rather than a general-purpose language that is aimed at any kind of software problem.

Currently tacit knowledge extraction or generation is a manual process. This process is tedious, human error-prone and lengthy. Conventional methods of natural language generation by inferencing large language models are limited to latency of the output. Conventional methods also suffer from lack in contextuality to subject matter specifically in a mixed scenario of domain specific language and general-purpose language, and in accuracy of output/response with respect to human alignment. There exists several algorithms and methodologies towards response generation with human feedback. However, low latency, contextual and accurate tacit knowledge generation is a challenging task.

### SUMMARY

Embodiments of the present disclosure present technological improvements as solutions to one or more of the above-mentioned technical problems recognized by the inventors in conventional systems. For example, in one aspect, a processor implemented method is provided. The processor implemented method includes receiving, via one or more hardware processors, (i) a plurality of knowledge data from at least one of (a) a plurality of documents provided by one or more users, and (b) a multimodal tacit knowledge database, and (ii) a query from the one or more users; preprocessing, via the one or more hardware processors, (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique; generating, via the one or more hardware processors, an ontology of the plurality of non-redundant clean knowledge data using an ontology generation system; generating, via the one or more hardware processors, a tokenized data by tokenizing (i) the plurality of non-redundant clean knowledge data and the generated ontology of the plurality of non-redundant clean knowledge data, and (ii) the preprocessed query, using a data tokenization engine; chunking, via the one or more hardware processors, the tokenized data using one or more dynamic data chunking engine to obtain a plurality of token chunks; generating, via the one or more hardware processors, a vector embedding of (i) each of the plurality of token chunks in a high-dimensional vector space to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database; computing, via the one or more hardware processors, a similarity measure between the plurality of the knowledge vectors and the query vector using a similarity search technique, wherein the similarity search technique utilizes a pre-defined distance metric between the query vector and the plurality of knowledge vectors to compute the similarity measure; obtaining, via the one or more hardware processors, a plurality of context vectors based on the similarity measure by retrieving a set of knowledge vectors from the plurality of knowledge vectors having a maximum similarity with the query vector; generating, via the one or more hardware processors, a plurality of prompts by concatenating the plurality of context vectors with the query vector, wherein the plurality of prompts represent a plurality of concatenated context vectors stored along with the query vector; performing, via the one or more hardware processors, a dynamic batch scheduling of the plurality of prompts towards high performance computing workload management in a distributed computing environment; and inputting, via the one or more hardware processors, the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.

In another aspect, there is provided a system. The system includes a memory storing instructions; one or more communication interfaces; and one or more hardware processors coupled to the memory via the one or more communication interfaces, wherein the one or more hardware processors are configured by the instructions to: receive (i) a plurality of knowledge data from at least one of (a) a plurality of documents provided by one or more users, and (b) a multimodal tacit knowledge database, and (ii) a query from the one or more users; preprocess (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique; generate an ontology of the plurality of non-redundant clean knowledge data using an ontology generation system; generate a tokenized data by tokenizing (i) the plurality of non-redundant clean knowledge data and the generated ontology of the plurality of non-redundant clean knowledge data, and (ii) the preprocessed query, using a data tokenization engine; chunk the tokenized data using one or more dynamic data chunking engine to obtain a plurality of token chunks; generate a vector embedding of (i) each of the plurality of token chunks in a high-dimensional vector space to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database; compute a similarity measure between the plurality of the knowledge vectors and the query vector using a similarity search technique, wherein the similarity search technique utilizes a pre-defined distance metric between the query vector and the plurality of knowledge vectors to compute the similarity measure; obtain a plurality of context vectors based on the similarity measure by retrieving a set of knowledge vectors from the plurality of knowledge vectors having a maximum similarity with the query vector; generate a plurality of prompts by concatenating the plurality of context vectors with the query vector, wherein the plurality of prompts represent a plurality of concatenated context vectors stored along with the query vector; perform dynamic batch scheduling of the plurality of prompts towards high performance computing workload management in a distributed computing environment; and input the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.

In yet another aspect, there are provided one or more non-transitory machine readable information storage mediums comprising one or more instructions which when executed by one or more hardware processors causes at least one of: receiving (i) a plurality of knowledge data from at least one of (a) a plurality of documents provided by one or more users, and (b) a multimodal tacit knowledge database, and (ii) a query from the one or more users; preprocessing (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique; generating an ontology of the plurality of non-redundant clean knowledge data using an ontology generation system; generating a tokenized data by tokenizing (i) the plurality of non-redundant clean knowledge data and the generated ontology of the plurality of non-redundant clean knowledge data, and (ii) the preprocessed query, using a data tokenization engine; chunking the tokenized data using one or more dynamic data chunking engine to obtain a plurality of token chunks; generating a vector embedding of (i) each of the plurality of token chunks in a high-dimensional vector space to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database; computing a similarity measure between the plurality of the knowledge vectors and the query vector using a similarity search technique, wherein the similarity search technique utilizes a pre-defined distance metric between the query vector and the plurality of knowledge vectors to compute the similarity measure; obtaining a plurality of context vectors based on the similarity measure by retrieving a set of knowledge vectors from the plurality of knowledge vectors having a maximum similarity with the query vector; generating a plurality of prompts by concatenating the plurality of context vectors with the query vector, wherein the plurality of prompts represent a plurality of concatenated context vectors stored along with the query vector; performing a dynamic batch scheduling of the plurality of prompts towards high performance computing workload management in a distributed computing environment; and inputting the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.

In accordance with an embodiment of the present disclosure, the plurality of knowledge vectors pertains to a plurality of vector embeddings of tokenized the plurality of non-redundant clean knowledge data and corresponding generated ontology of the plurality of non-redundant clean knowledge data.

In accordance with an embodiment of the present disclosure, the query vector pertains to the vector embedding of tokenized the preprocessed query.

In accordance with an embodiment of the present disclosure, the pre-defined distance metric is a cosine distance between one or more vectors which measures a cosine of the angle between the one or more vectors in the at least one vector database.

In accordance with an embodiment of the present disclosure, the plurality of prompts are inferenced in parallel using a low latency inference engine of the LLM based framework that orchestrates a distributed tensor model parallelism and a distributed data parallel engine for reducing latency.

In accordance with an embodiment of the present disclosure, inferencing of the LLM based framework is performed using the distributed computing environment comprising (i) at least one graphical processing unit and (ii) at least one central processing unit, using multicore parallel processing and message passing interface to enhance scalability of computing.

In accordance with an embodiment of the present disclosure, the LLM based framework is hosted for the inferencing on at least one of (i) a private cloud environment with enablement of data security features, and (ii) a public cloud environment where a cloud cost predictor determines optimally a cost of inferencing with respect to a computing cost, a storage cost, and a cost pertaining to an application programming interface (API) service call of the RLHF solver.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a system for tacit knowledge generation using high performance computing in document synthesis, according to some embodiments of the present disclosure.
FIG. 2 is a block diagram of system of FIG. 1 illustrating a process for elucidating a distributed computing and storage environment for tacit knowledge generation using high performance computing in document synthesis, according to some embodiments of the present disclosure.
FIG. 3 is a block diagram illustrating a high performance accelerated artificial intelligence and analytics platform with large language model (HPC-A3-LLM) comprised in system of FIG. 1, for tacit knowledge generation, in accordance with some embodiments of the present disclosure.
FIGS. 4A and 4B depict an exemplary flow diagram illustrating method for tacit knowledge generation using high performance computing in document synthesis, according to some embodiments of the present disclosure.
FIG. 5 depicts a schematic diagram of an intelligent dynamic batch job scheduler for Dynamic Workload Mapping in the high performance accelerated artificial intelligence and analytics platform with large language model, in accordance with some embodiments of the present disclosure.
FIG. 6 is an exemplary working example of tacit knowledge generation with respect to a natural language query using the high performance accelerated artificial intelligence and analytics platform with large language model, in accordance with some embodiments of the present disclosure.
FIG. 7 depicts a block diagram of an experimental setup for tacit knowledge generation using the high performance accelerated artificial intelligence and analytics platform with large language model, in accordance with some embodiments of the present disclosure.
FIGS. 8A and 8B provide graphical representations illustrating a comparison of a conventional inference module with a low latency inference engine in the high performance accelerated artificial intelligence and analytics platform with large language model for single GPU and 8 GPU computing setup, in terms of inference time, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for tacit knowledge generation using high performance computing in document synthesis. Conventionally, tacit knowledge extraction or generation is a manual, tedious, human error-prone and lengthy process. In an example, the tacit knowledge may comprise a statement of requirement (SoR) generation for a product design, in particular, in specific industry such as a manufacturing industry. The present disclosure includes understanding and generating tacit knowledge in the form of multimodal content of general-purpose language and domain specific language by integrated high performance accelerated artificial intelligence and analytics platform with large language model solver (HPC-A3-LLM).

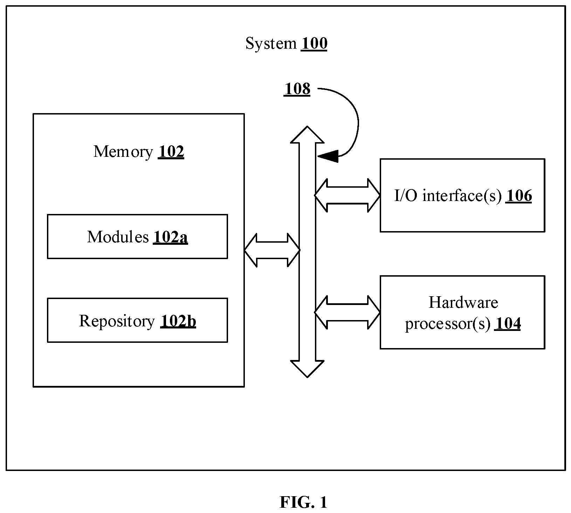

Referring now to the drawings, and more particularly to FIGS. 1 through 8B, where similar reference characters denote corresponding features consistently throughout the figures, there are shown preferred embodiments and these embodiments are described in the context of the following exemplary system and/or method.

FIG. 1 illustrates a system 100 for tacit knowledge generation using high performance computing in document synthesis, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, one or more distributed hardware processors comprising multi-core central processing units (CPU) and graphical processing units (GPU), and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 102 may also include large language models (LLM) memory which stores data obtained from the large language model (LLM) solver. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types. The plurality of modules 102a comprises high performance computing accelerated artificial intelligence and analytics (HPC-A3) module, LLM solver, one or more datastores, cloud cost predictor, external API/tool integrator, intelligent dynamic batch job scheduler, and/or the like.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database and a data engine. The data engine may include but are not limited to a data ingestion engine including a data cleansing system and an ontology generation system, a data security engine, a data tokenization engine, a dynamic data chunking engine, a data vector embedding engine, a context knowledge generation engine, a prompt generation engine including a query and context concatenation engine and a context chaining engine, a reinforcement learning with human feedback (RLHF) engine (Also, referred as reinforcement learning with human feedback (RLHF) based solver), a response generation engine, a data vector similarity search engine, a distributed high performance computing (HPC) engine, a low latency inference engine, and/or the like.

Further, the repository 102b amongst other things, may serve as a database or includes a plurality of databases for storing the data that is processed, received, or generated as a result of the execution of the plurality of modules 102a. The plurality of databases may include a multimodal tacit knowledge database, a query database, a response database, a vector database, a graph database, a relational database, and/or the like. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

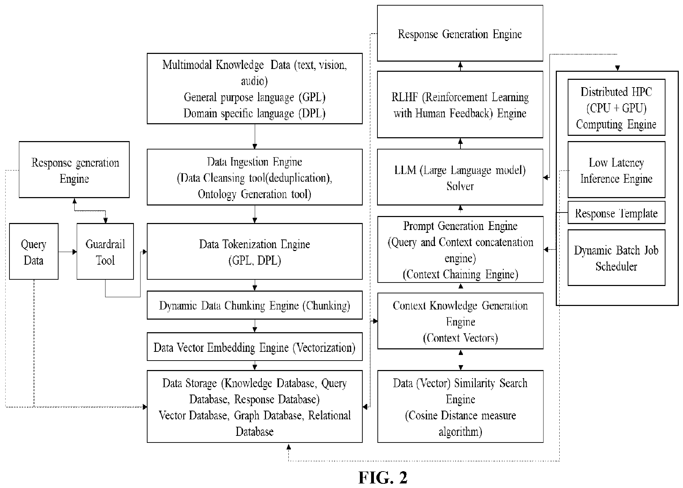

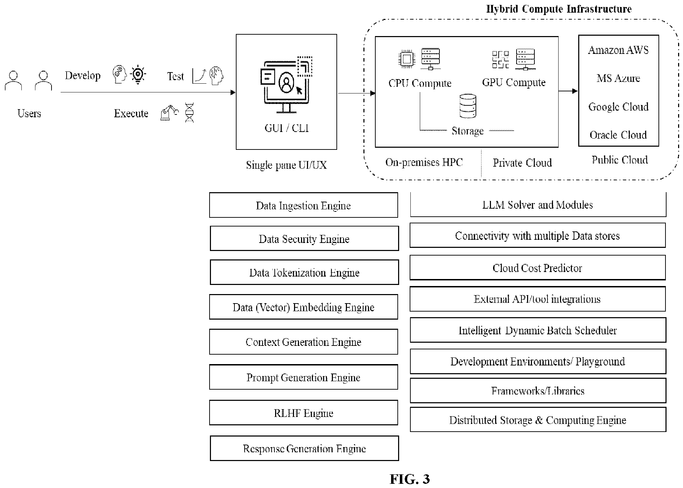

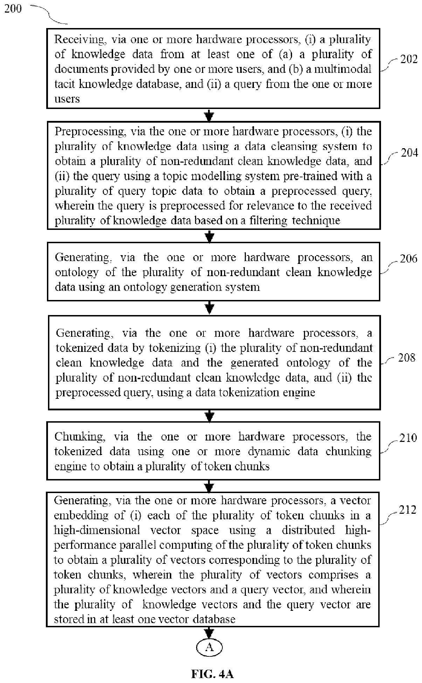

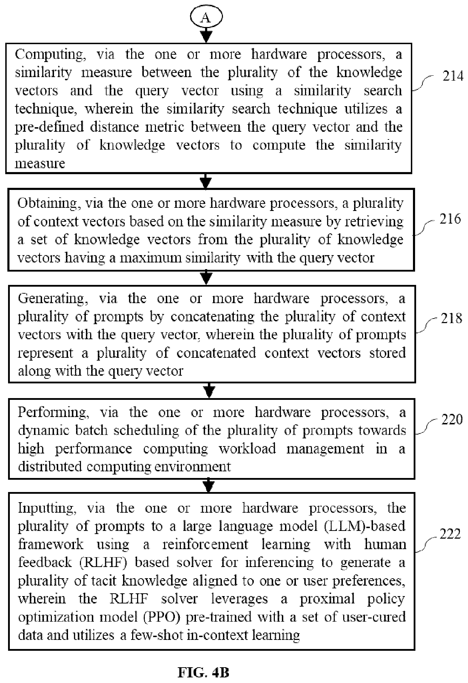

FIG. 2 is a block diagram of the system 100 of FIG. 1 illustrating a process for elucidating a distributed computing and storage environment for tacit knowledge generation using high performance computing in document synthesis, according to some embodiments of the present disclosure. FIG. 3 is a block diagram illustrating a high performance accelerated artificial intelligence and analytics platform with large language model (HPC-A3-LLM) comprised in the system 100 of FIG. 1, for tacit knowledge generation, in accordance with some embodiments of the present disclosure. The HPC-A3-LLM platform provides an option of private could deployment in comparison to public cloud deployment with a cloud cost predictor. Functions of the components of the system 100 are now explained with reference to block diagrams as depicted in FIG. 2 and FIG. 3, and steps in flow diagrams in FIGS. 4A and 4B.

FIGS. 4A and 4B depict an exemplary flow diagram illustrating a method for tacit knowledge generation using high performance computing in document synthesis, according to some embodiments of the present disclosure. Referring to FIGS. 2A and 2B, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, block diagrams depicted in FIG. 2 and FIG. 3, the flow diagram as depicted in FIGS. 4A and 4B, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

With reference to block diagrams depicted in FIG. 2 and FIG. 3, and referring to the steps of the method 200 in FIG. 4A, at step 202 of the present disclosure, the one or more hardware processors 104 are configured to receive (i) a plurality of knowledge data from at least one of (a) a plurality of documents provided by one or more users, and (b) a multimodal tacit knowledge database, and (ii) a query from the one or more users. The plurality of knowledge data comprises structured data, unstructured data, and semi-structured data (i.e., knowledge and tacit knowledge) pertaining to the multimodal tacit knowledge database. The multimodal tacit knowledge database comprises textual data, image data, audio data, and/or the like. This means that the plurality of knowledge data can be in the form of plain text, power point, tabular data, excel sheets, images, design documents, ontology data, speech data, chat or tweet, email content, and/or the like. Further, the textual data comprised in the multimodal tacit knowledge database can be obtained in a general-purpose language or domain specific language by the data ingestion engine as shown in FIG. 2. In an embodiment, the domain specific language could be from but not limited to a manufacturing or automotive industry. The plurality of knowledge data is being prepared and curated by the one or more subject matter experts. For example, the 'tacit knowledge' for a statement of requirement generation (SoR) for a product design can comprise multimodal data as well as domain specific language (DSL) for domain specific ontological data. In an embodiment, the query could be received from the one or more users through a user interface including a generative artificial intelligence (GenAI) user interface in a multimodal content, natural language text, general-purpose language text, and/or the like. The one or more users may include but are not limited to a Chief Experience Officer (CXO), field technician, design release engineer (DRE), business analyst, and/or the like. As shown in FIG. 3, application front end is a single pane user interface (UI/UX) window, which takes the query as an input.

Further, with reference to block diagrams depicted in FIG. 2 and FIG. 3, and referring to the steps of the method 200 in FIG. 4A, at step 204 of the present disclosure, the one or more hardware processors 104 are configured to preprocess (i) the plurality of knowledge data using a data cleansing system to obtain a plurality of non-redundant clean knowledge data, and (ii) the query using a topic modelling system pre-trained with a plurality of query topic data to obtain a preprocessed query. In an embodiment, the topic modelling system could be a system comprised in the system 100 or a system external to the system 100. The query is preprocessed for relevance to the received plurality of knowledge data based on a filtering technique. As shown in FIGS. 2 and 3, the as-is received knowledge data is subject to clean up by the data cleansing system (i.e., deduplication tool) as a pre-processing step to eliminate redundancy. The received query is guard railed or filtered using the topic modeling system which is pre-trained with a plurality of query topic data for considering query relevant to said subject matter. As shown in FIG. 2, a guard rail module is provided which can act like a filter and can be pre-trained on the topics of a current context. For example, for a statement of requirement (SoR) generation for a product design context, asking a query about the Capitol of a Country (e.g., What is the Capital of India?) is non-contextual and irrelevant. Such queries are rejected and are returned with a response saying, *"This is not within the context of the discussion",* and/or the like. The query is passed through the guardrail module or the filter, through which only contextual queries would pass. This is also referred to as topic-based hallucination detection.

Furthermore, at step 206 of the present disclosure, the one or more hardware processors 104 are configured to generate an ontology of the plurality of non-redundant clean knowledge data using an ontology generation system. The ontology generation system ingests a domain specific language and generates a corresponding ontology automatically.

Referring to FIG. 4A, at step 208 of the present disclosure, the one or more hardware processors 104 are configured to generate a tokenized data by tokenizing (i) the plurality of non-redundant clean knowledge data and the generated ontology of the plurality of non-redundant clean knowledge data, and (ii) the preprocessed query, using a data tokenization engine. As shown in FIGS. 2 and 3, the plurality of non-redundant clean knowledge data is obtained after preprocessing and the generated ontology therein is tokenized into a series of tokens using the data tokenization engine. The data tokenization engine may include one or more general-purpose tokenizer, one or more domain specific tokenizer, or a combination thereof. In another embodiment, the data tokenization engine is a large language model (LLM) tokenizer which is capable of tokenizing the general-purpose language as well as the domain specific language for a given ontology.

In an embodiment, at step 210 of the present disclosure, the one or more hardware processors 104 are configured to chunk the tokenized data using one or more dynamic data chunking engine to obtain a plurality of token chunks. The tokenized data (i.e., series of tokens) is then grouped or chunked for the purpose of faster, parallel, and distributed processing by HPC-A3-LLM using the one or more dynamic data chunking engine. The preprocessed query is divided into chunks for distributed, parallel processing and each chunk is tokenized in parallel. Usually, the chunk lengths are of the order of 1000 tokens. In other words, maximum chunk length represented by number of tokens is kept 1000 in the present disclosure. However, the maximum chunk length is not limited to 1000 and can have varying values and such values shall not be construed as limiting the scope of the present disclosure.

At step 212 of the present disclosure, the one or more hardware processors 104 are configured to generate a vector embedding of (i) each of the plurality of token chunks in a high-dimensional vector space using a distributed high-performance parallel computing of the plurality of token chunks to obtain a plurality of vectors corresponding to the plurality of token chunks. The plurality of vectors comprises a plurality of knowledge vectors and a query vector. Each token chunk from the plurality of token chunks undergoes vector embeddings in parallel and is stored as knowledge vector in the high-dimensional vector database. In one of the embodiments, these vectors are to be of size or dimension 384. The plurality of knowledge vectors are generated in parallel by distributed multicore processing incorporating graphical processing unit and core processing units, using various parallelization techniques such as message passing interface (mpi) threads or the like. The plurality of knowledge vectors and the query vector are stored in at least one vector database. The plurality of knowledge vectors pertains to a plurality of vector embeddings of tokenized the plurality of non-redundant clean knowledge data and corresponding generated ontology of the plurality of non-redundant clean knowledge data. The query vector pertains to the vector embedding of tokenized the preprocessed query. The query vector is a vector embedded in a high dimensional vector space, having the same vector size or dimension as that of the plurality of knowledge vectors. The plurality of knowledge vectors are the plurality of high dimensional knowledge vectors. The at least one vector database is a high dimensional knowledge vector database such as a Qdrant vector database, as known in the art. The chunked and tokenized query undergoes vector embedding to generate the query vectors (sets), which are of the same size or dimension as that of the plurality of knowledge vectors. The at least one vector database is also hosted on high-speed storage devices (i.e., a parallel file system - not shown in FIGS.). The capacity of the high-speed storage devices is expandable based on use cases. As shown in FIG. 2, the system 100 of the present disclosure also comprises a relational database and a graph database. The relational database store other relational data and schema therein. The data stored in the relational database can often be fetched further to get appended with context data. In an embodiment, the relational data can be ontological data.

Referring to FIG. 4B, at step 214 of the present disclosure, the one or more hardware processors 104 are configured to compute a similarity measure between the plurality of the knowledge vectors and the query vector using a similarity search technique. The similarity search technique utilizes a pre-defined distance metric between the query vector and the plurality of knowledge vectors to compute the similarity measure. In other words, each of the at least one vector database against is searched against each query vector to determine the similarity of each of the plurality of knowledge vectors with the query vector by a user-configured similarity search algorithm with a user-defined threshold of similarity. The pre-defined distance metric is a cosine distance between one or more vectors which measures a cosine of the angle between the one or more vectors in the at least one vector database. The pre-defined distance metric is a user specified threshold.

In an embodiment, at step 216 of the present disclosure, the one or more hardware processors 104 are configured to obtain a plurality of context vectors based on the similarity measure by retrieving a set of knowledge vectors from the plurality of knowledge vectors having a maximum similarity with the query vector. The plurality of context vectors includes direct context vectors and fuzzy context vectors. The set of knowledge vectors represents top *K* knowledge vectors retrieved from the plurality of knowledge vectors having the maximum similarity with the query vector. For each N query vector, similarity search technique (i.e., cosine distance measure) retrieves top *K* knowledge vectors. This gives *N * K* direct context vectors and *N_{C_{K}}* fuzzy context vectors, so a total of C *= N* * *K + N_{C_{K}}* context vectors.

At step 218 of the present disclosure, the one or more hardware processors 104 are configured to generate a plurality of prompts by concatenating the plurality of context vectors with the query vector. The plurality of prompts represents a plurality of concatenated context vectors stored along with the query vector. The top *K* contexts vectors for each query are then chained by context chaining to generate a complete context for a given query set. In an embodiment, Langchain is used for context chaining. The plurality of prompts are inferenced in parallel using a low latency inference engine of the LLM based framework that orchestrates a distributed tensor model parallelism and a distributed data parallel engine for reducing latency. The plurality of context vectors C are concatenated with N query vectors towards inferencing by a large language model (LLM) solver to form the plurality of prompts. The plurality of concatenated context vectors along with each query vector are stored as individual prompt for the purpose of inferencing, where total inference time depends on the number of prompts. In another embodiment, each query vector with the concatenated context vectors forms the plurality of prompts which are inferenced in parallel by the distributed tensor model parallel and distributed data parallel engine, towards significantly reduction in the latency of the throughput/response. In an embodiment, the plurality of prompts are subjected to scalable inferencing by a multi-core general processing unit (GPU) of the HPC-A3 LLM in place of a single-core GPU to reduce the latency of the response further for a given throughput. In an embodiment, as 'context' is a fuzzy concept, all top k context vectors for each query chunk are considered and are chained for further processing and corresponding response generation. Furthermore, the ontology stored in the relational database can get appended with the context vector towards response generation.

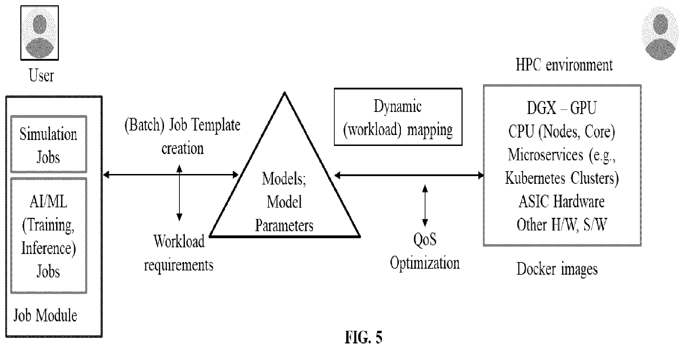

At step 220 of the present disclosure, the one or more hardware processors 104 are configured to perform a dynamic batch scheduling of the plurality of prompts towards high performance computing workload management in a distributed computing environment. FIG. 5 depicts a schematic diagram of an intelligent dynamic batch job scheduler for Dynamic Workload Mapping in the high performance accelerated artificial intelligence and analytics platform with large language model, in accordance with some embodiments of the present disclosure. The intelligent dynamic batch job scheduler creates distributed batch jobs of the plurality of prompts for the purpose of workload distribution to the LLM solver.

Further, at step 222 of the present disclosure, the one or more hardware processors 104 are configured to input the plurality of prompts to a large language (LLM) model-based framework using a reinforcement learning with human feedback (RLHF) based solver for inferencing to generate a plurality of tacit knowledge aligned to one or user preferences. The RLHF solver leverages a proximal policy optimization model (PPO) pre-trained with a set of user-cured data and utilizes a few-shot in-context learning. In an embodiment, a response is generated upon completion of each prompt from the plurality of prompts which is run through the reinforcement learning with human feedback (RLHF) based solver to generate a plurality of responses which are accurate and aligned to user preferences. The generated plurality of responses or completion of the plurality of prompts represents the generated plurality of tacit knowledge as text or image. It is an instruction-led prompt-completion. The plurality of responses are generated in user-defined templates which are incorporated in the plurality of prompts as learning examples termed as the few-shot in-context learning by the HPC-A3-LLM. Here, shot refers to the number of examples in a prompt. In the context of the present disclosure, the number of shots is typically between 2 and 5. Overall text size is determined by length of a context window. The text size larger than the length of the context window is chunked and chained, referred as 'context chaining'.

In an embodiment, the plurality of prompts are further appended with at least one response template towards generation of few shots in-context learning response template by the LLM solver. As shown in FIG. 2, a low latency inference engine integrated with the LLM solver is configured to generate responses which are manyfold reduction in latency with respect to industry standard inference engine. For standard inferencing, total inference time increases on the number of prompts being run. For low latency inferencing, the inferencing is performed by dynamic batch scheduling of the plurality of prompts and further incorporating distributed data parallel technique and model sharding technique. A 10-fold reduction in the inferencing with low latency inference engine is achieved on a single GPU and a 30-fold reduction on a multi-core 8 GPU is achieved.

In an embodiment, the low latency inference engine orchestrates distributed tensor model parallelism by sharing one or more tensor model parameters such as model weights, weight gradients, optimization states of the large language model (LLM) of the LLM solver. In an embodiment, the multi-core GPU (graphical processing unit) distributed computing framework orchestrates such low latency inferencing. As shown in FIG. 3, the LLM based framework is hosted for the inferencing on at least one of (i) a private cloud environment with enablement of data security features, and (ii) a public cloud environment where a cloud cost predictor determines optimally a cost of inferencing with respect to a computing cost, a storage cost, and a cost pertaining to an application programming interface (API) service call of the RLHF solver.

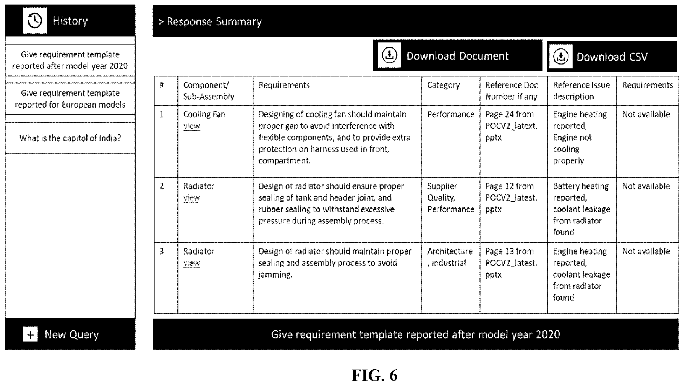

FIG. 6 is an exemplary working example of tacit knowledge generation with respect to a natural language query using the high performance accelerated artificial intelligence and analytics platform with large language model, in accordance with some embodiments of the present disclosure. For example, the tacit knowledge generation is towards the statement of requirement generation (SoR) for a product design. Such product design can be from an automotive industry. As an example, the statement of requirement generation can include a radiator coolant fan or radiator fan module, for a design release engineer (DRE), field technician or for the CXO of an organization. This tacit knowledge can be present as lesson learnt data or issue list data during course of the product designing and engineering. Based on a user persona, the statement of requirement template would be different and also the generation of the text in such requirement templates. The data for the training and testing are curated by the DRE and the field technicians. The working example considers non-functioning or malfunctioning of the radiator fan module or the coolant fan. There are several reasons by which such module can be malfunctioning. The reasons may include a designing fault, a component missing, an underlying circuit being faulty, an architectural defect piece, a defective motor design, and/or the like. The received data or the plurality of knowledge data may comprise vehicle segment, market segment, manufacturing region, model year, powertrain, component system supplier, problem statements, root cause, potential solution, lesson learnt with respect to the issue lists, requirement category, and/or the like, in textual description and associated images, design diagrams with image or design description as the metadata. It can also comprise mathematical formulae in the description. The format of the received data can be doc, power point, plain text, excel, chat description, email data and other. Such data is a mixture of structured, semi-structured and unstructured data. Further, in the description, there can be listed issues which may include high vibration from the cooling fan, damage in the electrical wiring due to continuous friction between the coolant fan wiring and coolant hoses, slipping of viscous Dutch causing the coolant fan to not working, condenser sagging during assembly, engine overheating, radiator leakage, defective condenser mounting, refrigerant leakage from the condenser, sensor misplacement, or many other. Over the years, such issues get piled up and are being learnt by the engineers or the technicians as the tacit knowledge. The resultant solutions are also learnt on the field and are mentioned in some textual format or as a figure drawing or an image with caption metadata across years, makers, market, and vendors. In the present disclosure, such tacit knowledge is learnt and generated based on a user-query. There are multiple lessons learnt for a given query and all these can be outputted in a user defined template or in a tabular format, as desired.

### EXPERIMENTAL RESULTS:

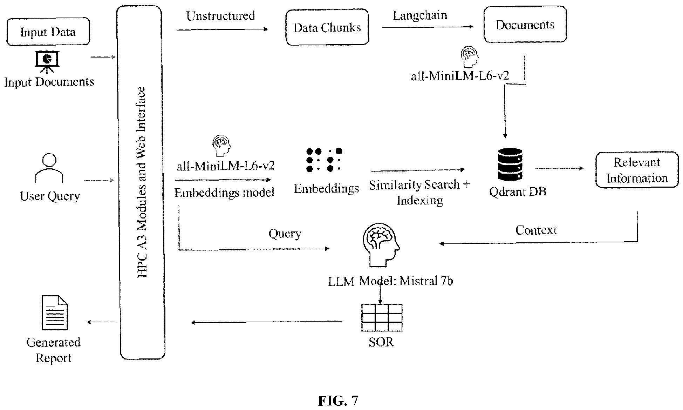

FIG. 7 depicts a block diagram of an experimental setup for tacit knowledge generation using the high performance accelerated artificial intelligence and analytics platform with large language model, in accordance with some embodiments of the present disclosure. As shown in FIG. 7, in the present disclosure, input data can be obtained and curated by the subject matter expert. The data is tokenized using the Tokenizer (same as Mistral 7B^{™} large language model (LLM) tokenizer) and embedding from central transformer (all_manylm_lc_v2). The input tokenized data is then vector embedded and is stored in the Vector database (e.g., in Qdrant). The tacit knowledge similarity search algorithm is a vector similarity search algorithm, written in a python script. The context chunking and chaining can be obtained by Langchain, based on the context window length. For the Inferencing or in-context learning, a single GPU works well for the RAG workflow. Further, the intelligent dynamic batch scheduling engine is applied for distributed prompt processing and the low latency module with distributed tensor model parallelism and distributed data parallelism is used for faster inferencing (say, in 3-4 sec). In the context of the present disclosure, the large language model chosen is Mistral 7B^{™}, with 7 billion parameters. Mistral 7B^{™} has an intelligent Sliding Window Attention (SWA) mechanism that helps to handle sequence of considerable length towards in-context learning (ICL), grouped-query Attention (GQA) mechanism enables faster inference, surpass capabilities of state in the art large language models (LLMs) on several performance benchmarks.

Table 1 and Table 2 below provide a comparative analysis for standard inference and low inference in terms of inference time on a single GPU and 8 GPU respectively.

| | Standard Inference(Time in sec) | Low Inference (Time in sec) |
|---|---|---|
| 1 output | 4.685 | 2.57 |
| 3 outputs | 9.4 | 3.06 |
| 5 outputs | 16.23 | 3.61 |
| 10 outputs | 32.08 | 4.51 |
| 35 outputs | 109.7 | 10.06 |

**Table 1**

| | | |
|---|---|---|
| | Standard Inference (Time in seconds) | Low Inference (Time in seconds) |

**Table 2**

| | | |
|---|---|---|
| 1 output | 4.27 | 3.17 |
| 3 outputs | 7.49 | 3.57 |
| 5 outputs | 15.27 | 4.06 |
| 10 outputs | 32.8 | 4.57 |
| 35 outputs | 130.12 | 9.97 |
| 350 outputs | 1218.9 | 49.38 |

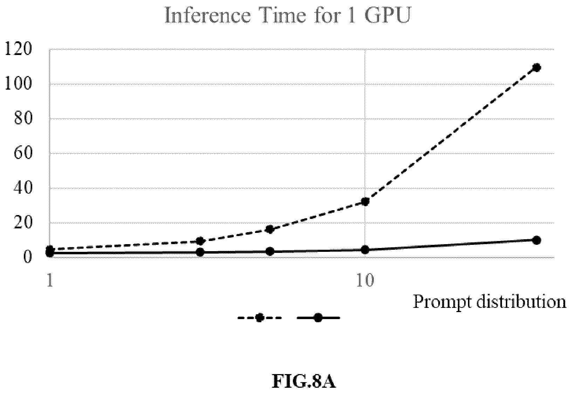

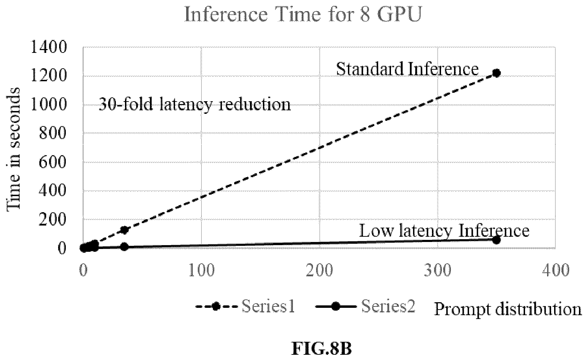

FIGS. 8A and 8B provide graphical representations illustrating a comparison of a conventional inference module with a low latency inference engine in the high performance accelerated artificial intelligence and analytics platform with large language model for single GPU and 8 GPU computing setup, in terms of inference time, in accordance with some embodiments of the present disclosure. The conventional module is an industry standard inference module. As shown in FIG. 7A, the low latency inference engine. exhibits 10-fold latency reduction while using single GPU. It is shown in FIG. 7B that for a distributed scalable computing architecture with multi-core GPU, the low latency inference engine exhibits 30-fold latency reduction while using 8 GPU cores respectively.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The present disclosure herein addresses the problem of synthesizing a series of documents and extracting or summarizing meaningful information/content embedded as tacit knowledge in the documents. The embodiment of the present disclosure provides a system and method tacit knowledge generation using high performance computing in document synthesis. The method of the present disclosure performs intelligent document generation orchestrating a generative artificial intelligence solution workflow. In the present disclosure, tacit knowledge of the subject matter expert in the knowledge base or in a series of documents is understood and extracted. Further a content capturing the tacit knowledge is generated leveraging a large language models (LLMs) framework as the underlying architecture. With an accelerated artificial intelligence (AI) platform as an orchestrator of such workloads, expected time spent by a user of approximately two weeks for the document generation can be accomplished accurately in several minutes. The system of the present disclosure is AI accelerated, cloud agnostic, latency defined, and security enabled.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
receiving (202), via one or more hardware processors, (i) a plurality of knowledge data from at least one of (a) a plurality of documents provided by one or more users, and (b) a multimodal tacit knowledge database, and (ii) a query from the one or more users;
preprocessing (204), via the one or more hardware processors, (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique;
generating (206), via the one or more hardware processors, an ontology of the plurality of non-redundant clean knowledge data using an ontology generation system;
generating (208), via the one or more hardware processors, a tokenized data by tokenizing (i) the plurality of non-redundant clean knowledge data and the generated ontology of the plurality of non-redundant clean knowledge data, and (ii) the preprocessed query, using a data tokenization engine;
chunking (210), via the one or more hardware processors, the tokenized data using one or more dynamic data chunking engine to obtain a plurality of token chunks;
generating (212), via the one or more hardware processors, a vector embedding of (i) each of the plurality of token chunks in a high-dimensional vector space using a distributed high-performance parallel computing of the plurality of token chunks to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database;
computing (214), via the one or more hardware processors, a similarity measure between the plurality of the knowledge vectors and the query vector using a similarity search technique, wherein the similarity search technique utilizes a pre-defined distance metric between the query vector and the plurality of knowledge vectors to compute the similarity measure;
obtaining (216), via the one or more hardware processors, a plurality of context vectors based on the similarity measure by retrieving a set of knowledge vectors from the plurality of knowledge vectors having a maximum similarity with the query vector;
generating (218), via the one or more hardware processors, a plurality of prompts by concatenating the plurality of context vectors with the query vector, wherein the plurality of prompts represent a plurality of concatenated context vectors stored along with the query vector;
performing (220), via the one or more hardware processors, a dynamic batch scheduling of the plurality of prompts towards high performance computing workload management in a distributed computing environment; and
inputting (222), via the one or more hardware processors, the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.

2. The processor implemented method as claimed in claim 1, wherein the plurality of knowledge vectors pertain to a plurality of vector embeddings of tokenized the plurality of non-redundant clean knowledge data and corresponding generated ontology of the plurality of non-redundant clean knowledge data.

3. The processor implemented method as claimed in claim 1, wherein the query vector pertains to the vector embedding of tokenized the preprocessed query.

4. The processor implemented method as claimed in claim 1, wherein the pre-defined distance metric is a cosine distance between one or more vectors which measures a cosine of the angle between the one or more vectors in the at least one vector database.

5. The processor implemented method as claimed in claim 1, wherein the plurality of prompts are inferenced in parallel using a low latency inference engine of the LLM based framework that orchestrates a distributed tensor model parallelism and a distributed data parallel engine for reducing latency.

6. The processor implemented method as claimed in claim 1, wherein the inferencing of the LLM based framework is performed using the distributed computing environment comprising (i) at least one graphical processing unit and (ii) at least one central processing unit, using multicore parallel processing and message passing interface to enhance scalability of computing.

7. The processor implemented method as claimed in claim 1, wherein the LLM based framework is hosted for the inferencing on at least one of (i) a private cloud environment with enablement of data security features, and (ii) a public cloud environment where a cloud cost predictor determines optimally a cost of inferencing with respect to a computing cost, a storage cost, and a cost pertaining to an application programming interface (API) service call of the RLHF solver.

8. A system (100), comprising
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive (i) a plurality of knowledge data from at least one of (a) a plurality of documents provided by one or more users, and (b) a multimodal tacit knowledge database, and (ii) a query from the one or more users;
preprocess (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique;
generate an ontology of the plurality of non-redundant clean knowledge data using an ontology generation system;
generate a tokenized data by tokenizing (i) the plurality of non-redundant clean knowledge data and the generated ontology of the plurality of non-redundant clean knowledge data, and (ii) the preprocessed query, using a data tokenization engine;
chunk the tokenized data using one or more dynamic data chunking engine to obtain a plurality of token chunks;
generate a vector embedding of (i) each of the plurality of token chunks in a high-dimensional vector space using a distributed high-performance parallel computing of the plurality of token chunks to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database;
compute a similarity measure between the plurality of the knowledge vectors and the query vector using a similarity search technique, wherein the similarity search technique utilizes a pre-defined distance metric between the query vector and the plurality of knowledge vectors to compute the similarity measure;
obtain a plurality of context vectors based on the similarity measure by retrieving a set of knowledge vectors from the plurality of knowledge vectors having a maximum similarity with the query vector;
generate a plurality of prompts by concatenating the plurality of context vectors with the query vector, wherein the plurality of prompts represent a plurality of concatenated context vectors stored along with the query vector;
perform a dynamic batch scheduling of the plurality of prompts towards high performance computing workload management in a distributed computing environment; and
input the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.

9. The system as claimed in claim 8, wherein the plurality of knowledge vectors pertains to a plurality of vector embeddings of tokenized the plurality of non-redundant clean knowledge data and corresponding generated ontology of the plurality of non-redundant clean knowledge data.

10. The system as claimed in claim 8, wherein the query vector pertains to the vector embedding of tokenized the preprocessed query.

11. The system as claimed in claim 8, wherein the pre-defined distance metric is a cosine distance between one or more vectors which measures a cosine of the angle between the one or more vectors in the at least one vector database.

12. The system as claimed in claim 8, wherein the plurality of prompts are inferenced in parallel using a low latency inference engine of the LLM based framework that orchestrates a distributed tensor model parallelism and a distributed data parallel engine for reducing latency.

13. The system as claimed in claim 8, wherein inferencing of the LLM based framework is performed using the distributed computing environment comprising (i) at least one graphical processing unit and (ii) at least one central processing unit, using multicore parallel processing and message passing interface to enhance scalability of computing.

14. The system as claimed in claim 8, wherein the LLM based framework is hosted for the inferencing on at least one of (i) a private cloud environment with enablement of data security features, and (ii) a public cloud environment where a cloud cost predictor determines optimally a cost of inferencing with respect to a computing cost, a storage cost, and a cost pertaining to an application programming interface (API) service call of the RLHF solver.

15. One or more non-transitory machine-readable information storage mediums comprising one or more instructions which when executed by one or more hardware processors cause:
receiving (i) a plurality of knowledge data from at least one of (a) a plurality of documents provided by one or more users, and (b) a multimodal tacit knowledge database, and (ii) a query from the one or more users;
preprocessing (i) the plurality of knowledge data using a data cleansing system to obtain a plurality of non-redundant clean knowledge data, and (ii) the query using a topic modelling system pre-trained with a plurality of query topic data to obtain a preprocessed query, wherein the query is preprocessed for relevance to the received plurality of knowledge data based on a filtering technique;
generating an ontology of the plurality of non-redundant clean knowledge data using an ontology generation system;
generating a tokenized data by tokenizing (i) the plurality of non-redundant clean knowledge data and the generated ontology of the plurality of non-redundant clean knowledge data, and (ii) the preprocessed query, using a data tokenization engine;
chunking the tokenized data using one or more dynamic data chunking engine to obtain a plurality of token chunks;
generating a vector embedding of (i) each of the plurality of token chunks in a high-dimensional vector space using a distributed high-performance parallel computing of the plurality of token chunks to obtain a plurality of vectors corresponding to the plurality of token chunks, wherein the plurality of vectors comprises a plurality of knowledge vectors and a query vector, and wherein the plurality of knowledge vectors and the query vector are stored in at least one vector database;
computing a similarity measure between the plurality of the knowledge vectors and the query vector using a similarity search technique, wherein the similarity search technique utilizes a pre-defined distance metric between the query vector and the plurality of knowledge vectors to compute the similarity measure;
obtaining a plurality of context vectors based on the similarity measure by retrieving a set of knowledge vectors from the plurality of knowledge vectors having a maximum similarity with the query vector;
generating a plurality of prompts by concatenating the plurality of context vectors with the query vector, wherein the plurality of prompts represent a plurality of concatenated context vectors stored along with the query vector;
performing a dynamic batch scheduling of the plurality of prompts towards high performance computing workload management in a distributed computing environment; and
inputting the plurality of prompts to a large language model (LLM)-based framework using a reinforcement learning with human feedback (RLHF) based solver for inferencing to generate a plurality of tacit knowledge aligned to one or user preferences, wherein the RLHF solver leverages a proximal policy optimization model (PPO) pre-trained with a set of user-cured data and utilizes a few-shot in-context learning.
